(19) Europäisches Patentamt
European Patent Office
Office européen des brevets

(11) Veröffentlichungsnummer: **0 347 697 B1**

(12) **EUROPÄISCHE PATENTSCHRIFT**

(45) Veröffentlichungstag der Patentschrift: **10.11.93**

(51) Int. Cl.$^{5}$: **C09B 11/12**, C09D 11/02

(21) Anmeldenummer: **89110567.8**

(22) Anmeldetag: **10.06.89**

# (54) Basische Rhodamin-Farbstoffe.

(30) Priorität: **23.06.88 DE 3821196**

(43) Veröffentlichungstag der Anmeldung: **27.12.89 Patentblatt 89/52**

(45) Bekanntmachung des Hinweises auf die Patenterteilung: **10.11.93 Patentblatt 93/45**

(84) Benannte Vertragsstaaten: **AT CH DE FR GB IT LI NL SE**

(56) Entgegenhaltungen: **FR-A- 2 401 958**

(73) Patentinhaber: **BASF Aktiengesellschaft**
**Carl-Bosch-Strasse 38**
**D-67063 Ludwigshafen(DE)**

(72) Erfinder: **Mayer, Udo, Dr.**
**Max-Slevogt-Strasse 27**
**D-6710 Frankenthal(DE)**
Erfinder: **Oberlinner, Andreas, Dr.**
**Im Zinkig 108**
**D-6700 Ludwigshafen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft basische Rhodamin-Farbstoffe der Formel I

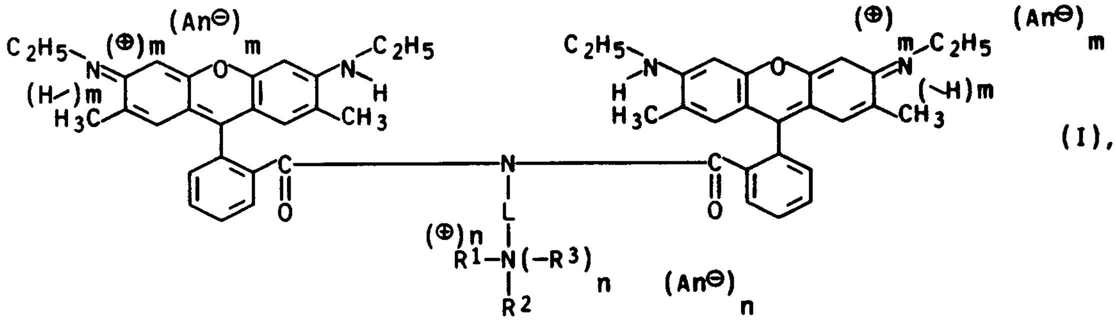

(I),

in der

| | |
|---|---|
| L | $C_2$-$C_{10}$-Alkylen, |
| $R^1$, $R^2$ und $R^3$ | gleich oder verschieden sind und unabhängig voneinander jeweils Wasserstoff, gegebenenfalls substituiertes $C_1$-$C_{10}$-Alkyl oder $C_5$-$C_7$-Cycloalkyl oder $R^1$ und $R^2$ zusammen mit dem sie verbindenden Stickstoffatom Pyrrolidino, Piperidino, Morpholino, Piperazino oder N-($C_1$-$C_4$-Alkyl)piperazino, |
| $An^{\ominus}$ | das Äquivalent eines Anions und |
| m und n | gleich oder verschieden sind und unabhängig voneinander jeweils 0 oder 1 bedeuten, |

eine Aufzeichnungsflüssigkeit für das Ink-Jet-Verfahren, enthaltend ein mit Wasser mischbares Lösungsmittel und einen basischen Rhodamin-Farbstoff der Formel I, sowie die Verwendung der neuen Farbstoffe zum Färben von Papierstoffen.

Aus der EP-A-167 998 sind bereits Rhodamin-Farbstoffe bekannt, die eine substituierte Carbamoylgruppe aufweisen. Die dort beschriebenen Farbstoffe weisen jedoch eine ungenügende Löslichkeit auf.

Aufgabe der vorliegenden Erfindung war es deshalb, neue basische Farbstoffe auf Rhodamin-Basis bereitzustellen, die diese Mängel nicht mehr besitzen.

Demgemäß wurden die basischen Rhodamin-Farbstoffe der obengenannten Formel I gefunden.

Alle in der obengenannten Formel I auftretenden Alkyl- und Alkylengruppen können sowohl geradkettig als auch verzweigt sein.

Wenn die in den Resten $R^1$, $R^2$ und $R^3$ auftretenden Alkylgruppen substituiert sind, kommen als Substituenten z.B. Phenyl, $C_5$-$C_7$-Cycloalkyl, Cyano, Hydroxy oder $C_1$-$C_4$-Alkoxy in Betracht.

Geeignete Reste L sind beispielsweise $-(CH_2)_2-$, $-(CH_2)_3-$, $-(CH_2)_4-$, $-(CH_2)_5-$, $-(CH_2)_6-$, $-(CH_2)_7-$, $-(CH_2)_8-$, $-(CH_2)_9-$, $-(CH_2)_{10}-$, $-CH(CH_3)-CH_2$ oder $-CH(CH_3)-CH(CH_3)-$.

Geeignete Reste $R^1$, $R^2$ und $R^3$ sind beispielsweise Methyl, Ethyl, Propyl, Isopropyl, Butyl, Isobutyl, sec-Butyl, Pentyl, Isopentyl, Neopentyl, tert-Pentyl, Hexyl, Heptyl, Octyl, 2-Ethylhexyl, Nonyl, Decyl, Benzyl, 1- oder 2-Phenylethyl, Cyclopentylmethyl, 1- oder 2-Cyclopentylethyl, Cyclohexylmethyl, 1- oder 2-Cyclohexylethyl, Cyanomethyl, 2-Cyanoethyl, 3-Cyanopropyl, 4-Cyanobutyl, 2-Hydroxyethyl, 2- oder 3-Hydroxypropyl, 2- oder 4-Hydroxybutyl, 2-Methoxyethyl, 2-Ethoxyethyl, 2-Propoxyethyl, 2-Butoxyethyl, 2- oder 3-Methoxypropyl, 2- oder 3-Ethoxypropyl, 2- oder 4-Methoxybutyl, 2- oder 4-Ethoxybutyl, Cyclopentyl, Cyclohexyl, Methylcyclohexyl oder Cycloheptyl.

Wenn $R^1$ und $R^2$ zusammen mit dem sie verbindenden Stickstoffatom einen heterocyclischen Rest bedeuten, kommen neben den bereits genannten weiterhin z.B. N-Methylpiperazino, N-Ethylpiperazino, N-Propylpiperazino oder N-Butylpiperazino als heterocyclischer Rest in Betracht.

Geeignete Anionen von denen sich das Äquivalent $An^{\ominus}$ ableitet, sind sowohl anorganische als auch organische Anionen, z.B. Chlorid, Bromid, Iodid, Sulfat, Hydrogensulfat, Aminosulfat, Methosulfat, Ethosulfat, Perchlorat, Methylsulfonat, Benzolsulfonat, Methylbenzolsulfonat, Oxalat, Maleinat, Formiat, Acetat, Hydroxyacetat, Methoxyacetat, Propionat, Succinimid oder Tartrat.

Besonders bevorzugt sind basische Rhodaminfarbstoffe der Formel I, in der L $C_2$-$C_4$-Alkylen und $R^1$, $R^2$ und $R^3$ $C_1$-$C_4$-Alkyl bedeuten.

Zur Herstellung der basischen Rhodaminfarbstoffe der Formel I kann man z.B. einen Rhodaminfarbstoff der Formel II oder III

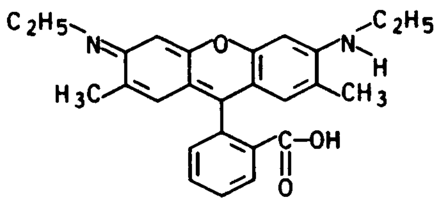

(II)

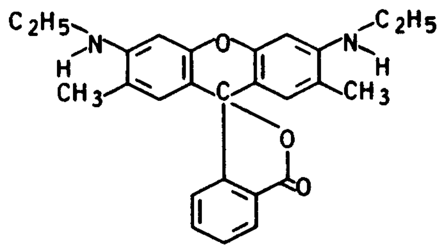

(III)

mit einem Amin der Formel IV

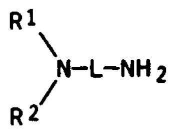

(IV)

in der L, $R^1$ und $R^2$ jeweils die obengenannte Bedeutung besitzen, umsetzen.

Die Umsetzung wird beispielsweise so vorgenommen, daß man den Rhodamin-Farbstoff und das Amin im Molverhältnis 1:1,5 bis 1:2 in einem inerten organischen Lösungsmittel vorlegt und anschließend 1 bis 3 Mol, bezogen auf den Rhodamin-Farbstoff, eines Säurehalogenids zugibt. Danach wird zweckmäßig für 2 bis 12 Stunden auf eine Temperatur von 80 bis 130 °C erhitzt. Nach beendeter Reaktion wird vom Lösungsmittel abgetrennt, z.B. durch Zugabe von Wasser und azeotroper Destillation des jeweiligen Lösungsmittels. Bei anschließender Zugabe von verdünnter Lauge, z.B. Natronlauge, fällt das Zielprodukt aus und kann dann abgetrennt werden.

Geeignete organische Lösungsmittel sind z.B. Toluol, Xylol, Chlorbenzol, Dichlorbenzol, Chloroform, 1,2-Dichlorethan oder Trichlorethan.

Geeignete Säurehalogenide, insbesondere Säurechloride, sind z.B. Phosphortrichlorid, Phosphoroxidtrichlorid oder Phosphorpentachlorid.

Durch Ansäuern mit einer Säure (siehe z.B. $An^{\ominus}$) oder durch Alkylierung (z.B. mit Dimethylsulfat oder Diethylsulfat) nach an sich bekannten Methoden können dann diejenigen Rhodamin-Farbstoffe der Formel I erhalten werden, bei denen m und/oder n 1 bedeutet.

Die Erfindung betrifft weiterhin eine Aufzeichnungsflüssigkeit für das Ink-Jet-Verfahren, enthaltend ein mit Wasser mischbares organisches Lösungsmittel sowie einen basischen Rhodamin-Farbstoff der Formel I.

Mit Wasser mischbare organische Lösungsmittel sind z.B. $C_1$-$C_4$-Alkanole, wie Methanol, Ethanol, Propanol, Isopropanol, Butanol, Isobutanol, sec-Butanol oder tert-Butanol, Carbonsäureamide, wie N,N-Dimethylformamid oder N,N-Dimethylacetamid, Lactame, wie N-Methylpyrrolidin-2-on, cyclische Harnstoffe, wie 1,3-Dimethylimidazolidin-2-on, Ketone oder Ketoalkohole, wie Aceton, Methylethylketon oder 2-Methyl-2-hydroxypentan-4-on, Ether, wie Tetrahydrofuran oder Dioxan, Mono-, Di- oder Polyalkylenglykole oder -thioglykole, die $C_2$-$C_6$-Alkyleneinheiten aufweisen, wie Ethylenglykol, 1,2- oder 1,3-Propylenglykol, 1,2- oder 1,4-Butylenglykol, 1,6-Hexylenglykol, Diethylenglykol, Triethylenglykol, Thiodiglykol, Polyethylenglykol oder Polypropylenglykol, andere Polyole, wie Glycerin oder Hexan-1,2,6-triol, $C_1$-$C_4$-Alkylether von mehrwertigen Alkoholen, wie Ethylenglykolmonomethyl- oder -monoethylether, Diethylenglykolmonomethyl- oder -monoethylether oder Triethylenglykolmonomethyl- oder -monoethylether oder Dimethylsulfoxid.

Mit Wasser mischbare organische Lösungsmittel, die bevorzugt sind, sind beispielsweise N-Methylpyrrolidin-2-on, Mono-, Di- oder Trialkylenglykole, die $C_2$-$C_6$-Alkyleneinheiten aufweisen, insbesondere Mono-, Di- oder Triethylenglykol, oder Dimethylsulfoxid. Ganz besonders hervorzuheben sind N-Methylpyrrolidin-2-on, Diethylenglykol oder Dimethylsulfoxid.

Der Anteil des Farbstoffs der Formel I liegt bei 2 bis 10 Gew.-%, vorzugsweise 3 bis 5 Gew.-%, jeweils bezogen auf das Gesamtgewicht der Aufzeichnungsflüssigkeit.

Bevorzugt ist eine Aufzeichnungsflüssigkeit, die neben dem Farbstoff der Formel I und einem mit Wasser mischbaren organischen Lösungsmittel zusätzlich noch Wasser enthält.

In diesem Fall enthält die erfindungsgemäße Aufzeichnungsflüssigkeit für das Ink-Jet-Verfahren im allgemeinen 50 bis 95 Gew.% und insbesondere 70 bis 95 Gew.-%, jeweils bezogen auf das Gesamtgewicht des Lösungsmittelsystems, an Wasser.

Die neue Aufzeichnungsflüssigkeit kann weiterhin Hilfsmittel, beispielsweise Mittel zur Beeinflussung der Viskosität, wie Polyvinylchlorid oder Cellulosederivate, Tenside (nichtionisch, anionisch oder kationisch) oder Puffersysteme enthalten.

Die erfindungsgemäßen Farbstoffe der Formel I eignen sich weiterhin insbesondere zum Färben von Papierstoffen, aber auch von anionisch modifizierten Fasern, für die Herstellung von Druckpasten oder Drucktinten oder zum Färben von Leder oder Kunststoffen. Mit ihnen können auch gebleichte (holzfreie oder holzarme) Zellstoffe in brillanten Rottönen gefärbt werden. Die Baderschöpfung ist dabei hoch. Insbesondere ist die gute Löslichkeit der neuen Rhodamin-Farbstoffe hervorzuheben.

Die folgenden Beispiele sollen die Erfindung näher erläutern.

Beispiel 1

103 g Farbbase der Formel

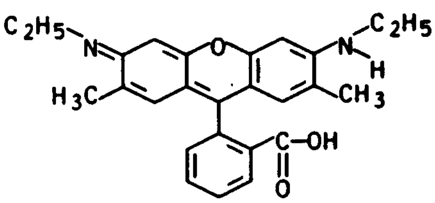

und 25 g 3-Dimethylaminopropylamin wurden in 260 g o-Dichlorbenzol eingetragen. Das Gemisch wurde mit 61 g Phosphoroxidtrichlorid versetzt und danach 6 Stunden bei 120 °C gehalten. Der Ansatz wurde mit einer Lösung von 22 g Natriumhydroxid in 200 ml Wasser hydrolysiert und durch Wasserdampfdestillation vom o-Dichlorbenzol befreit. Die Farbstoffsuspension wurde dann mit 450 ml Wasser verdünnt und mit Natronlauge auf einen pH-Wert von 8,5 gestellt. Das ausgefallene Produkt wurde abgesaugt, mit Wasser gewaschen und getrocknet. Dabei wurden 130 g Farbstoff der Formel

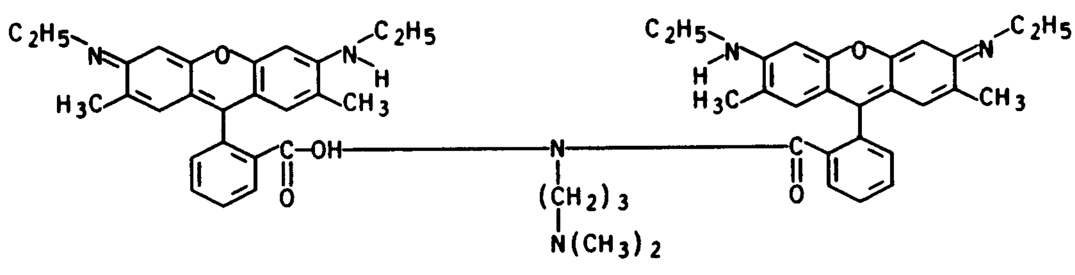

erhalten ($\lambda_{max}$: 534 nm).

Der Farbstoff färbt Papierfasern in brillanten roten Tönen. Auch beim Färben von holzfreien Papieren wurde das Färbebad praktisch vollständig ausgezogen.

Eine 3 gew.%ige Lösung des Farbstoffes in einer Mischung aus 7 Vol.-Teilen Wasser, 2 Vol.-Teilen Diethylenglykol und 1 Vol.-Teil N-Methylpyrrolidin-2-on ergab nach dem Ink-Jet-Verfahren Drucke von guter Reib- und Wasserechtheit.

Analog Beispiel 1 werden die in der folgenden Tabelle aufgeführten Farbstoffe der Formel

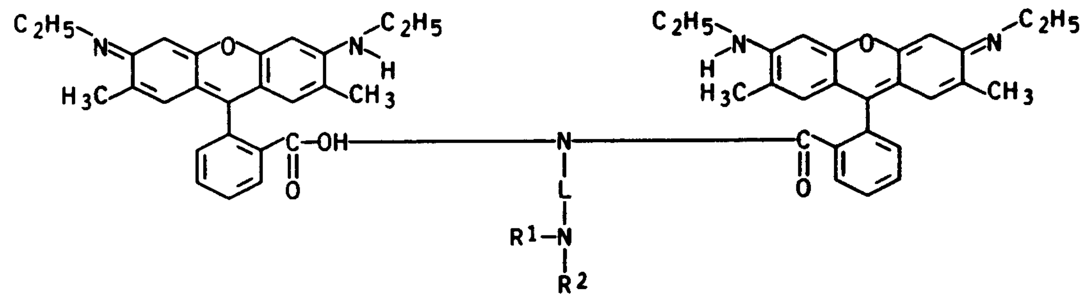

erhalten.

| Beispiel Nr. | L | 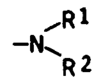 |
|---|---|---|
| 2 | $C_2H_4$ | $N(CH_3)_2$ |
| 3 | $C_2H_4$ | $N(C_2H_5)_2$ |
| 4 | $C_3H_6$ | $N(C_2H_5)_2$ |
| 5 | $C_3H_6$ | $NH-CH_3$ |
| 6 | $C_3H_6$ | 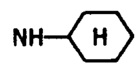 |
| 7 | $CH(CH_3)C_3H_6$ | $N(C_2H_5)_2$ |
| 8 | $C_2H_4$ | 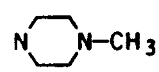 |

Beispiel 9

5 g des in Beispiel 1 hergestellten Farbstoffs wurden in 50 g 1,2-Dichlorethan gelöst und mit 2 g Dimethylsulfat bei 50 °C methyliert. Nach einer Reaktionszeit von 6 Stunden wurde mit 5 g 25 gew.%iger Ammoniaklösung das überschüssige Dimethylsulfat zersetzt. Danach wurde auf 25 °C abgekühlt, der Niederschlag abgesaugt und mit wenig Dichlorethan gewaschen. Nach dem Trocknen erhielt man 4 g eines Farbstoffs der Formel

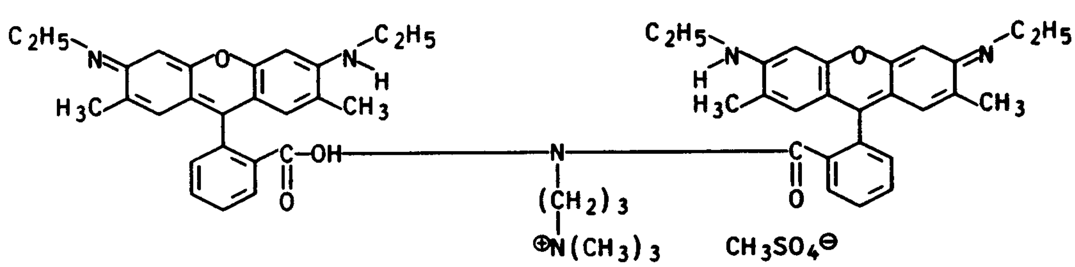

## Patentansprüche

**1.** Basische Rhodamin-Farbstoffe der Formel I

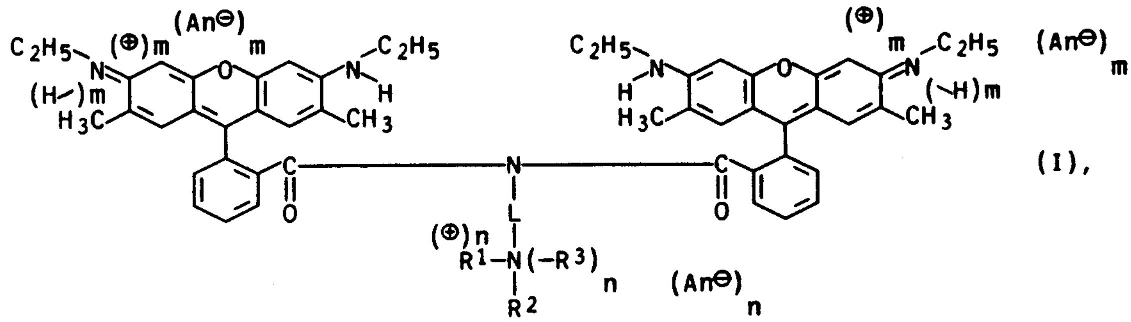

(I),

in der

| | |
|---|---|
| L | $C_2$-$C_{10}$-Alkylen, |
| $R^1$, $R^2$ und $R^3$ | gleich oder verschieden sind und unabhängig voneinander jeweils Wasserstoff, gegebenenfalls substituiertes $C_1$-$C_{10}$-Alkyl oder $C_5$-$C_7$-Cycloalkyl oder $R^1$ und $R^2$ zusammen mit dem sie verbindenden Stickstoffatom Pyrrolidino, Piperidino, Morpholino, Piperazino oder N-($C_1$-$C_4$-Alkyl)piperazino, |
| $An^{\ominus}$ | das Äquivalent eines Anions und |
| m und n | gleich oder verschieden sind und unabhängig voneinander jeweils 0 oder 1 bedeuten. |

**2.** Basische Rhodamin-Farbstoffe gemäß Anspruch 1, dadurch gekennzeichnet, daß L $C_2$-$C_4$-Alkylen und $R^1$, $R^2$ und $R^3$ $C_1$-$C_4$-Alkyl bedeuten.

**3.** Aufzeichnungsflüssigkeit für das Ink-Jet-Verfahren, enthaltend ein mit Wasser mischbares Lösungsmittel und einen basischen Rhodamin-Farbstoff gemäß Anspruch 1.

**4.** Verwendung der basischen Rhodamin-Farbstoffe gemäß Anspruch 1 zum Färben von Papierstoffen.

## Claims

**1.** A basic rhodamine dye of the formula I

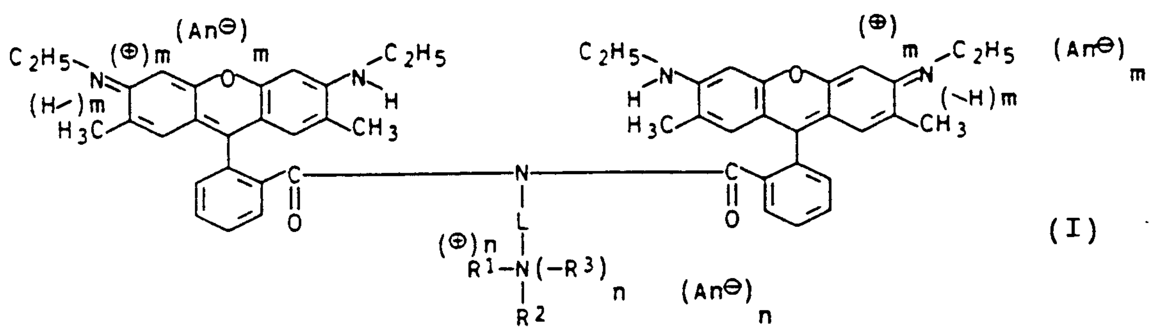

(I)

where

| | |
|---|---|
| L | is $C_2$-$C_{10}$-alkylene, |
| $R^1$, $R^2$ and $R^3$ | are identical or different and each is independently of the others hydrogen, substituted or unsubstituted $C_1$-$C_{10}$-alkyl or $C_5$-$C_7$-cycloalkyl, or $R_1$ and $R_2$ together with the nitrogen atom linking them together are pyrrolidino, piperidino, morpholino, piperazino or N-($C_1$-$C_4$-alkyl)-piperazino, |
| $An^{\ominus}$ | is one equivalent of an anion and |
| m and n | are identical or different and each is independently of the other 0 or 1. |

2. A basic rhodamine dye as claimed in claim 1, wherein L is $C_2$-$C_4$-alkylene and $R^1$, $R^2$ and $R^3$ are each $C_1$-$C_4$-alkyl.

3. A recording fluid for the ink jet process, comprising a water-miscible solvent and a basic rhodamine dye as claimed in claim 1.

4. The use of a basic rhodamine dye as claimed in claim 1 for coloring paper stock.

**Revendications**

1. Colorants basiques de la famille de la rhodamine, de formule I

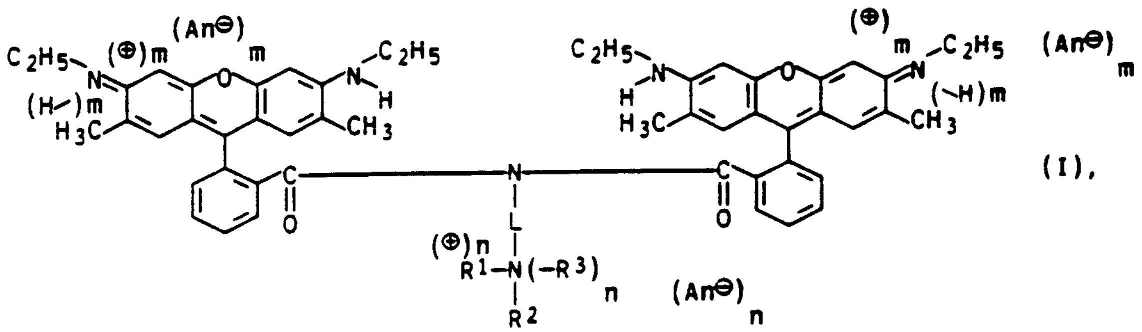

(I),

dans laquelle

| | |
|---|---|
| L | représente un radical alkylène en $C_2$-$C_{10}$, |
| $R^1$, $R^2$ et $R^3$ | sont identiques ou différents et représentent chacun, indépendamment les uns des autres, un atome d'hydrogène ou un radical alkyle en $C_1$-$C_{10}$ ou cycloalkyle en $C_5$-$C_7$ éventuellement substitué, ou $R^1$ et $R^2$ forment ensemble, avec l'atome d'azote qui les relie, un radical pyrrolidino, pipéridino, morpholino, pipérazino ou N-(alkyl en $C_1$-$C_4$)pipérazino, |
| $An^{\ominus}$ | est l'équivalent d'un anion et |
| m et n | sont identiques ou différents et mis chacun, indépendamment l'un de l'autre, pour 0 ou 1. |

2. Colorants basiques de la famille de la rhodamine selon la revendication 1, caractérisés en ce que L représente un radical alkylène en $C_2$-$C_4$ et $R^1$, $R^2$ et $R^3$ représentent chacun un radical alkyle en $C_1$-$C_4$.

3. Liquide d'impression pour le procédé à jet d'encre, contenant un solvant miscible à l'eau et un colorant basique de la famille de la rhodamine selon la revendication 1.

4. Utilisation des colorants basiques de la famille de la rhodamine selon la revendication 1 pour la coloration de pâte de papier.